(19) Europäisches Patentamt
European Patent Office
Office européen des brevets

(11) **EP 2 831 615 B1**

(12) **FASCICULE DE BREVET EUROPEEN**

(45) Date de publication et mention de la délivrance du brevet:
**18.01.2017 Bulletin 2017/03**

(51) Int Cl.:
*G01S 3/14* (2006.01)     *G01S 7/35* (2006.01)
*G01S 13/02* (2006.01)

(21) Numéro de dépôt: **13713157.9**

(22) Date de dépôt: **26.03.2013**

(86) Numéro de dépôt international:
**PCT/EP2013/056406**

(87) Numéro de publication internationale:
**WO 2013/144146 (03.10.2013 Gazette 2013/40)**

(54) **DISPOSITIF DE DÉTECTION ÉLECTROMAGNÉTIQUE ACTIF ET PASSIF À FAIBLE PROBABILITÉ D'INTERCEPTION**

VORRICHTUNG FÜR AKTIVE UND PASSIVE ELEKTROMAGNETISCHE DETEKTION MIT GERINGER WAHRSCHEINLICHKEIT VON UNTERBRECHUNGEN

DEVICE FOR ACTIVE AND PASSIVE ELECTROMAGNETIC DETECTION WITH A LOW LIKELIHOOD OF INTERCEPTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2012 FR 1200967**

(43) Date de publication de la demande:
**04.02.2015 Bulletin 2015/06**

(73) Titulaire: **THALES**
**92400 Courbevoie (FR)**

(72) Inventeurs:
• **CORNIC, Pascal**
**F-29820 Guilers (FR)**
• **LE BIHAN, Patrick**
**F-78851 Elancourt Cedex (FR)**
• **KEMKEMIAN, Stéphane**
**F-78851 Elancourt Cedex (FR)**

(74) Mandataire: **Priori, Enrico**
**Marks & Clerk France**
**Conseils en Propriété Industrielle**
**Immeuble «Visium»**
**22, avenue Aristide Briand**
**94117 Arcueil Cedex (FR)**

(56) Documents cités:
**EP-A1- 2 296 007      EP-A1- 2 434 310**
**US-A- 5 339 284       US-A1- 2010 033 377**
**US-A1- 2010 328 157**

• **CHEN J ET AL: "A new method for joint DOD and DOA estimation in bistatic MIMO radar", SIGNAL PROCESSING, ELSEVIER SCIENCE PUBLISHERS B.V. AMSTERDAM, NL, vol. 90, no. 2, 1 février 2010 (2010-02-01), pages 714-718, XP026652535, ISSN: 0165-1684, DOI: 10.1016/J.SIGPRO.2009.08.003 [extrait le 2009-08-15]**
• **STEPHANE KEMKEMIAN ET AL: "Toward common radar & EW multifunction active arrays", PHASED ARRAY SYSTEMS AND TECHNOLOGY (ARRAY), 2010 IEEE INTERNATIONAL SYMPOSIUM ON, IEEE, PISCATAWAY, NJ, USA, 12 octobre 2010 (2010-10-12), pages 777-784, XP031828584, ISBN: 978-1-4244-5127-2**

**Description**

La présente invention concerne le domaine de la détection électromagnétique. La présente invention concerne plus particulièrement un dispositif de détection électromagnétique actif et passif à faible probabilité d'interception. La présente invention peut trouver son utilité dans des applications terrestres, maritimes ou aéroportées.

Les radars à faible probabilité d'interception ou LPI suivant le sigle anglo saxon pour Low Probability of Intercept, se développent de plus en plus. Il a été démontré que ces radars, bien que difficilement détectables par les intercepteurs conventionnels, peuvent être détectés par des systèmes de mesure de renseignement spécialement dédiés à cet effet, par exemple en utilisant une antenne à grand gain en rotation. Il y a donc un besoin pour renforcer la discrétion de ces radars dits LPI afin que leur détection soit la plus difficile possible.

Il est connu, des systèmes radar à faible probabilité d'interception réalisant une fonction de détection passive et active à l'aide d'un radar tournant. Malheureusement, même si la fonction d'interception passive n'est pas détectable par principe, le système reste vulnérable si le radar peut être détecté lorsqu'il est en émission. De plus les antennes tournantes nécessitent l'utilisation de joints tournants hyperfréquence qui sont généralement des composants critiques. Un autre inconvénient des antennes tournantes est lié au bruit généré par les mécanismes de rotation de l'antenne qui nuit à la discrétion acoustique du radar. La transmission de signaux numériques et/ou optiques très large bande entre la partie mobile et la partie fixe du radar pose également problème.

Par ailleurs, lorsque l'environnement ne permet pas l'utilisation de servomécanismes comme par exemple lorsque le système est destiné à être monté sur un véhicule où le risque de chocs est important, ou bien lorsqu'il est nécessaire de détecter en un temps très faible, un système à antenne directive en rotation ne peut être utilisé, compte tenu du temps nécessaire pour balayer l'ensemble du domaine angulaire, typiquement quelques secondes pour 360°.

Il est également connu, notamment par la publication de CHEN J. et AL: "A new method for joint DOD and DOA estimation in bistatic MIMO radar", SIGNAL PROCESSING, ELSEVIER SCIENCE PUBLISHERS B.V. AMSTERDAM, NL, vol. 90, no. 2, 1 février 2010, pages 714-718, une méthode d'estimation de direction d'arrivée et de direction de départ de signaux pour des radars bistatiques de type MIMO.

En général, les radars LPI émettent des impulsions de faible puissance crête par rapport aux radars impulsionnels classiques. Plutôt que d'émettre des impulsions de courte durée et de forte puissance, les radars LPI ont la particularité de répartir la puissance sur le temps. Ils émettent ainsi des impulsions de faible puissance crête mais sur un temps beaucoup plus long et dans le cas extrême, l'émission est continue ou quasi continue. Un inconvénient de cette technique d'émission est que lorsqu'elle est employée seule elle peut être contrée par des détecteurs utilisant, par exemple, des traitements permettant une intégration cohérente du signal sur un temps long, typiquement de l'ordre de une à quelques dizaines de millisecondes.

D'autre part, les radars à ondes continues présentent un inconvénient majeur, relatif au couplage entre l'émission et la réception qui sont simultanées, ce qui tend à fortement limiter leur utilisation dès que la portée demandée est importante, typiquement au-delà d'une à quelques dizaines de kilomètres.

Un but de l'invention est notamment de corriger les inconvénients précités en proposant un dispositif de détection permettant d'effectuer une détection active et passive facilement intégrable, robuste vis à vis de l'environnement mécanique, et présentant une très faible probabilité d'interception par les systèmes adverses.

A cet effet, l'invention a pour objet un dispositif de détection électromagnétique actif et passif à faible probabilité d'interception comportant une structure antennaire fixe, des moyens d'émission et des moyens de réception,

- la structure antennaire étant formée d'une pluralité d'éléments rayonnants regroupés en sous réseaux identiques et comprenant au moins un sous réseau d'émission et au moins trois sous réseaux de réception distincts des sous réseaux d'émission,

- les moyens d'émission étant aptes à générer une forme d'onde continue ou quasi continue de faible puissance crête non focalisée dans un plan et à émettre cette forme d'onde via le ou les sous réseaux d'émission,

- les moyens de réception étant aptes à détecter les cibles après formation d'une pluralité de faisceaux directifs à partir des signaux reçus sur les sous réseau de réception de la structure antennaire,

- les moyens de réception étant aptes à réaliser l'interception de signaux radar provenant d'autres sources radars par un traitement de corrélation croisée entre les signaux reçus sur au moins trois sous réseaux de réception, le groupe formé d'au moins trois sous réseaux de réception réalisant un système d'interférométrie lacunaire ne respectant pas les conditions de Shannon sur l'échantillonnage spatial,

- les moyens de réception étant également aptes à effectuer une localisation angulaire des sources d'émission radar potentielles par interférométrie de phase, les sous réseaux de réception utilisés formant au moins une première base d'interférométrie ambiguë et une seconde base d'interférométrie non ambigüe.

Selon une variante de réalisation, la structure antennaire comprend au moins deux sous réseaux d'émission et les moyens d'émission sont aptes à générer des signaux ayant des bandes de fréquences différentes et à émettre ces signaux sur des sous réseaux d'émission différents.

Selon une autre variante de réalisation, les moyens d'émission sont aptes à générer des signaux d'émission de forme identique centrés sur des fréquences différentes et occupant des bandes de fréquences disjointe.

Selon une autre variante de réalisation, les signaux d'émission sont de forme continue ou quasi continue et modulés en fréquences.

Selon une autre variante de réalisation, les moyens de réception sont aptes à démoduler les signaux reçus par l'un des signaux d'émission.

Selon une autre variante de réalisation, les moyens de réception sont aptes à démoduler les signaux reçus par l'un des signaux d'émission après transposition en fréquence de ce dernier.

Selon une autre variante de réalisation, les moyens de réception sont aptes à séparer les signaux reçus, après démodulation, en sous signaux de réception par filtrage passe bande, ledit filtrage étant effectué en fonction des signaux d'émission.

Selon une autre variante de réalisation, les moyens de réception sont aptes à intégrer temporellement de façon cohérente les différents signaux de réception, l'intégration de chaque sous signal s'effectuant de façon séparée.

Selon une autre variante de réalisation, les moyens de réception sont aptes à intégrer les sous signaux de réception spatialement et de façon cohérente afin de former des faisceaux directifs dans un plan.

Selon une autre variante de réalisation, après intégration cohérente temporelle et spatiale, les moyens de réception sont aptes à post intégrer les sous signaux de réception de façon non cohérente pendant tout le temps disponible pour l'exploration du domaine angulaire à couvrir.

Selon une autre variante de réalisation, les moyens de réception sont aptes à détecter les cibles potentielles dans chaque faisceau formé après post intégration non cohérente.

Selon une autre variante de réalisation, les moyens d'émission possèdent des moyens aptes à ajuster la puissance émise au minimum en fonction de la portée instrumentée et la surface équivalente radar à détecter.

Selon une autre variante de réalisation, les moyens de réception sont aptes, en mode passif, à effectuer une intercorrélation des signaux reçus sur au moins trois sous réseaux de réception de façon à détecter et la localiser de façon angulaire les sources d'émission potentielles.

Selon une autre variante de réalisation, les bases d'interférométrie sont formées par trois sous réseaux de réception, deux étant situés à chacune des deux extrémités de la structure antennaire et le troisième étant le voisin le plus proche de l'un des deux précédents.

Selon une autre variante de réalisation, les moyens de réception comportent des moyens de sélection aptes à sélectionner les sous réseaux à utiliser pour la détection et la localisation de façon différenciée au cours du temps de façon à séparer les signaux reçus et lever les ambigüités angulaires dans un environnement électromagnétique dense.

Selon une autre variante de réalisation, le dispositif comprend n structures antennaires avec n>=3, chaque structure couvrant un domaine angulaire sensiblement égale à 360°/n et chaque structure étant disposé sur chacune des faces latérales d'un polyèdre de base un polygone à n cotés de façon à couvrir un domaine angulaire sensiblement égale à 360°.

D'autres particularités et avantages de la présente invention apparaîtront plus clairement à la lecture de la description ci-après, donnée à titre illustratif et non limitatif, et faite en référence à son annexe et aux dessins annexés, dans lesquels :

- L'annexe 1 est un tableau de caractéristiques d'un radar LPI conventionnel et celle d'un mode de réalisation particulier d'un dispositif de détection selon l'invention ;

- La figure 1 représente différents exemples de modes de réalisation du dispositif suivant l'invention ;

- La figure 2 représente des exemples de mode de réalisation préférés du dispositif suivant l'invention ;

- La figure 3 représente un exemple de réalisation d'une structure antennaire à K entrées et M sorties;

- La figure 4 représente un exemple de réalisation d'une structure antennaire selon l'invention ;

- La figure 5 représente un exemple de réalisation d'un radar LPI conventionnel ;

- La figure 6 représente des courbes de gain de post-intégration en fonction du nombre d'intégration ;

- La figure 7 représente un exemple d'agencement de la structure antennaire selon l'invention ;

- La figure 8 représente un mode de réalisation particulier d'une structure antennaire à K entrées et M sorties selon l'invention ;

- La figure 9 représente des exemples de signaux émis par le dispositif de détection selon l'invention ;

- La figure 10 représente un exemple de synoptique de séparation des signaux reçu par le dispositif de détection ;

- La figure 11 représente un exemple de synoptique du traitement après séparations des signaux de réception ;

- La figure 12 représente un exemple de réalisation d'un sous réseau d'émission suivant l'invention ;

- La figure 13 est une courbe représentative de la portée en fonction du nombre d'éléments rayonnants activés ;

- La figure 14 représente un exemple de bases d'interférométrie choisie pour la fonction MRE ;

- La figure 15 représente un exemple de synoptique de traitement des signaux reçus de la fonction radar passif ;

- La figure 16 représente un exemple de répartition spectrale des signaux d'émission ;

- La figure 17 représente un exemple d'occupation spectrale des signaux reçus après démodulation ;

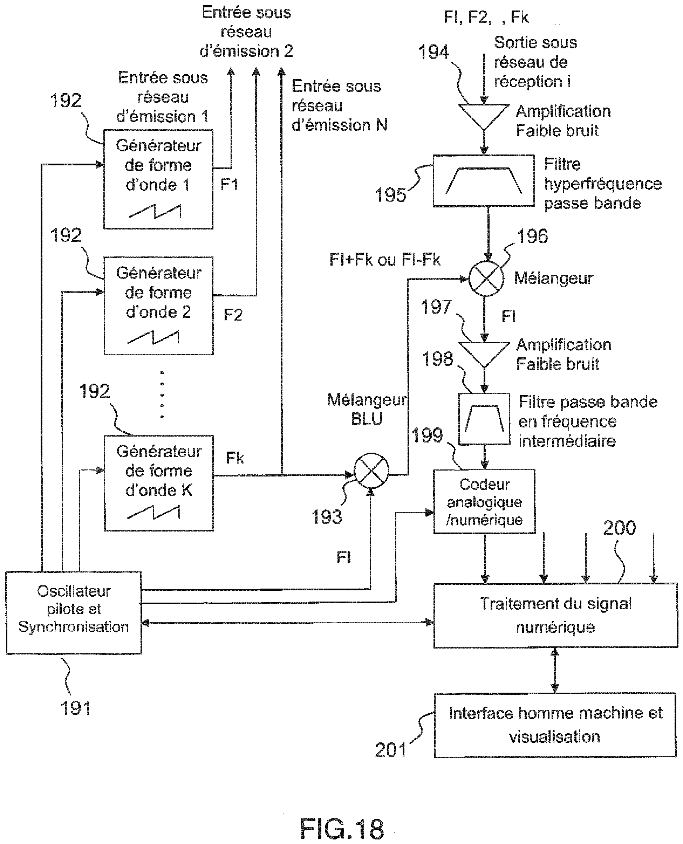

- La figure 18 représente un exemple de synoptique de traitement des signaux reçus en mode avec les fonctions radar actif et radar passif intégrées.

La solution proposée par la présente invention consiste à réaliser avec le même matériel, un dispositif de détection électromagnétique permettant une fonction d'interception à la fois active et passive, à très haute sensibilité, sans mécanisme de rotation et présentant une très faible probabilité d'interception par les systèmes adverses. Suivant un mode de réalisation préféré, le dispositif couvre un domaine angulaire de 360°.

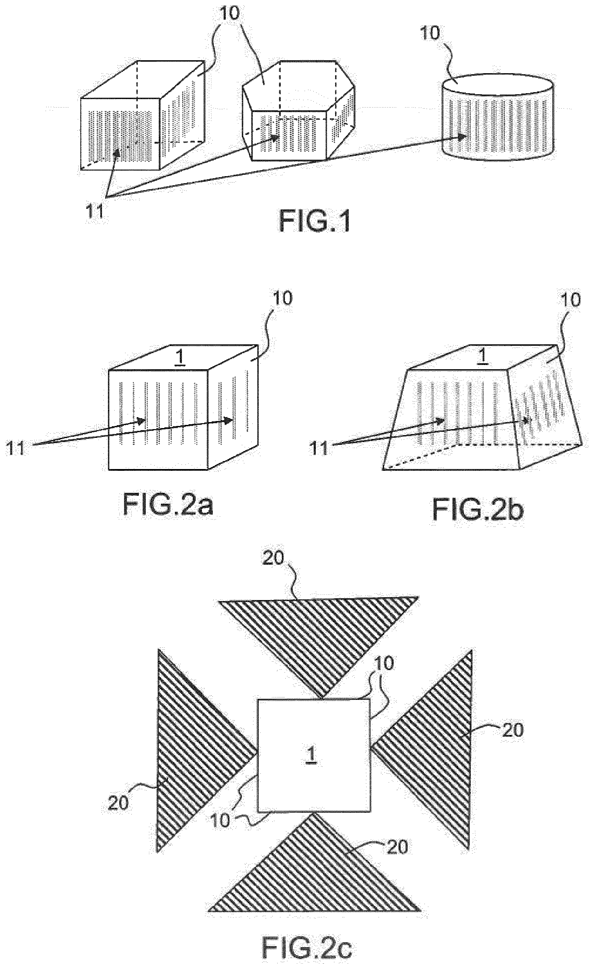

La figure 1 représente des exemples de modes de réalisation d'un dispositif de détection 1 suivant l'invention.

D'une façon générale, le dispositif de détection 1 a la forme d'un polyèdre dont la base est un polygone à n cotés (n≥1). Le dispositif comprend n structures antennaires 10 formées de plusieurs éléments rayonnants regroupés en sous réseaux 11. Afin de couvrir un domaine angulaire de 360° en gisement, chaque structure antennaire pourra avoir une couverture angulaire de 360°/n en gisement.

Le dispositif 1 peut également avoir une base cylindrique ou ovale ou toute autre forme possible.

Les structures antennaires 10 peuvent être des réseaux planaires ou conformés de façon à épouser les formes du dispositif de détection comme par exemple un cylindre ou un cône.

La figure 2 représente des modes de réalisation préférés. Les formes préférées pour la réalisation du dispositif de détection 1 sont le cube et la pyramide tronquées à base carrée. Les quatre faces latérales du dispositif sont recouvertes chacune d'un réseau antennaire 10 planaire couvrant un domaine angulaire d'environ 90° en gisement, et de quelques degrés à quelques dizaines de degrés en élévation. De façon à couvrir un domaine angulaire de 360° en gisement, les quatre structures antennaires 10 pourront être activées de façon successive ou simultanée.

La figure 2c représente une vue de dessus d'un mode de réalisation préféré montrant les domaines de couverture 20 de chaque structure antennaire 10 et donc la couverture angulaire totale en gisement du dispositif suivant l'invention.

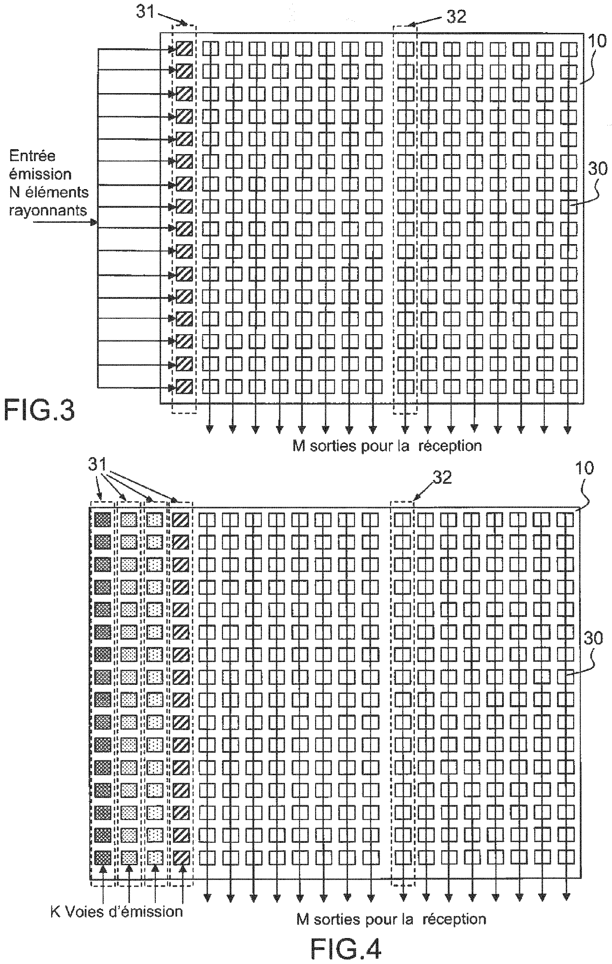

La figure 3 représente un exemple de réalisation d'une structure antennaire 10 selon l'invention. La structure représentée est le mode de réalisation le plus simple. La structure antennaire comprend un réseau vertical d'émission 31 correspondant à une colonne de N éléments rayonnants 30 identiques espacés entre eux d'une distance égale à la moitié de la longueur d'onde. Chaque élément rayonnant d'un sous réseau d'émission 31 est alimenté en phase par le même signal d'émission. Sur la même structure antennaire sont également disposés M sous réseaux verticaux de réception 32 comprenant chacun N éléments rayonnants 30 identiques connectés entre eux et séparés de $\lambda/2$.

Dans ce mode de réalisation, les sous réseaux d'émission 31 et de réception 32 ont le même nombre d'élément rayonnant 30. Ceci n'est nullement limitatif. Dans d'autres modes de réalisation, ces deux types de sous réseaux peuvent avoir des nombres d'éléments rayonnants 30 différents.

En supposant que les N éléments rayonnants 30 sont espacés de $\lambda/2$ dans les deux plans, la directivité du faisceau à l'émission est typiquement de 90° en gisement et de $360/N\pi$ en élévation, et $360/M\pi$ en gisement et en réception de $360/N\pi$ en élévation, après formation du faisceau.

La figure 4 représente un mode de réalisation dans lequel la structure antennaire comporte K sous réseaux d'émission 31 et M sous réseaux de réception 32. Chaque sous réseau d'émission 31 est alimenté par un signal d'émission différent et forme une voie d'émission. Les différents signaux d'émission sont orthogonaux entre eux.

La structure antennaire 10 présentée correspond à un réseau à K entrées et à M sorties. Cette structure est aussi connue sous le nom de MIMO pour Multiple Input Multiple Output selon la terminologie anglo saxonne.

Si les K sous réseaux d'émission sont alimentés par K signaux orthogonaux entre eux de puissance p, la puissance totale rayonnée par la structure antennaire est égale à K.p et l'énergie émise est répartie dans le domaine de couverture angulaire de l'élément rayonnant élémentaire, typiquement 90° en gisement et $(\lambda/2N).180/\pi$ en élévation. Si on considère que la longueur élémentaire d'un élément rayonnant Le est égale à la demi-longueur d'onde, le gain d'antenne à l'émission est alors pour chaque sous réseau d'émission:

$$G_e = \frac{4\pi S_e}{\lambda^2} = \frac{4\pi H_e L_e}{\lambda^2} = \frac{4\pi N\lambda L_e}{2\lambda^2} = \frac{2\pi N L_e}{\lambda} = \pi N$$

Avec :

$G_e$ : Gain d'antenne d'émission,
$S_e$ : Surface de l'antenne d'émission,
$H_e$ : Hauteur de l'antenne d'émission,
$L_e$ : Longueur de l'antenne d'émission,
$\lambda$ : Longueur d'onde du signal d'émission.

De plus, si les K signaux d'émissions occupent respectivement des bandes instantanées distinctes d'une largeur $\Delta F$, la puissance rayonnée instantanée totale est répartie dans une bande totale de largeur $K.\Delta F$.

Dans ces conditions, supposons qu'un dispositif de détection MRE pour "Mesure de Renseignement Électronique" (ou, selon la terminologie anglo saxonne, ESM pour "Electronic Support Measure") détecte le signal émis par le dispositif de détection 1 selon l'invention. Si la bande de réception MRE est parfaitement adaptée à la bande instantanée d'émission de largeur $\Delta F$ du signal radar, le dispositif de détection MRE captera une puissance p simultanément dans K filtres de réception de bande $\Delta F$.

Dans le cas où les K signaux d'émission seraient contenus dans la même bande de fréquence de largeur $\Delta F$, le dispositif de détection MRE aurait capté une puissance égale à K.p dans un seul filtre de réception.

L'étalement spectral du signal d'émission du dispositif 1 suivant l'invention permet de réduire d'un facteur K la puissance captée par un dispositif MRE et donc d'augmenter la discrétion du radar. Le "gain de discrétion " du signal radar ainsi obtenu par étalement spectral est égal à K.

Par ailleurs, la puissance équivalente isotrope rayonnée ($PIRE_1$) peut être obtenue par la formule :

$$PIRE_1 = KN\pi p$$

On peut remarquer que la puissance équivalente isotrope qui serait rayonnée par la même antenne si les K sous réseaux d'émission émettaient le même signal serait:

$$PIRE_2 = K^2 N\pi p = K.PIRE_1$$

Le "gain de discrétion relatif" du signal radar ainsi obtenu par défocalisation à l'émission serait dans ce cas égal à K et le gain de discrétion global serait égal à $K^2$.

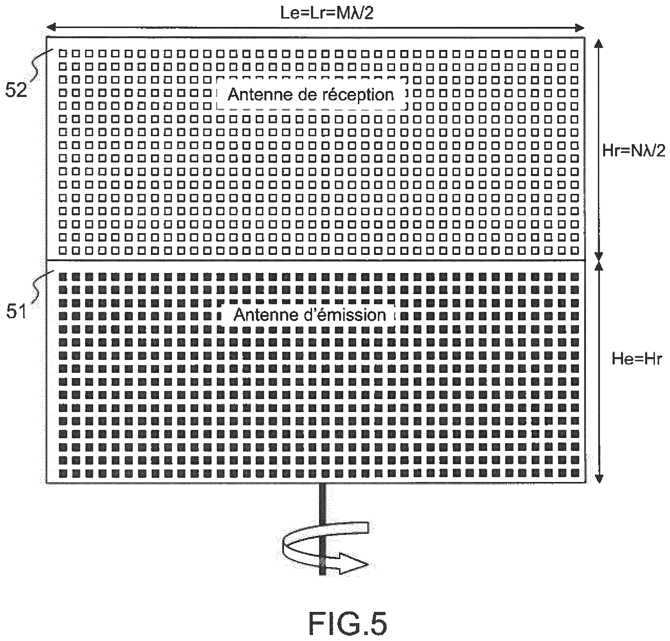

En référence aux figures 5 à 7, les performances du dispositif de détection électromagnétique 1 suivant, en mode radar, vont être comparées avec celles d'un radar LPI classique à ondes continues à faisceau étroit présentant la même surface d'antenne, à balayage mécanique ou électronique en gisement.

Pour des raisons de simplicité de réalisation, un radar LPI utilise de façon préférentielle, une forme d'onde périodique constituée de rampes de fréquences. La période est généralement de l'ordre de quelques centaines de microsecondes à quelques millisecondes.

La figure 5 représente un exemple de réalisation d'un radar LPI conventionnel à onde continue.

Dans la suite de la description, on considérera une forme d'onde continue modulée en fréquence ou FMCW pour Frequency Modulated Continuous Wave selon la terminologie anglo saxonne. Ceci n'est nullement limitatif et d'autres types de modulation sont possibles comme par exemple, une modulation par code de phase, une modulation de fréquence ou FSK (Frequency Shift Keying ou saut de fréquence).

Pour des raisons de découplage, un tel radar LPI à ondes continues comprend deux antennes d'émission 51 et de réception 52 distinctes, par exemple superposées. Ces antennes sont généralement directives dans les deux plans et présentent une ouverture angulaire hors pondération :

$$\text{En gisement : } \theta_{g3db}=\lambda/L_e =2/M \text{ (radians)}$$

$$\text{En élévation : } \theta_{e3db}=\lambda/H_e=2/N \text{ (radians)}$$

Elles présentent un gain à l'émission $Ge=Gr =4\pi S/\lambda^2$ .

En supposant un domaine de couverture angulaire $Q = \Omega_e.\Omega_g$ et un temps d'exploration du domaine Tex, le temps de présence de la cible dans le lobe d'antenne est

$$T_e=T_{ex} \theta_{g3db}\theta_{e3db} / \Omega$$

Le traitement radar adapté consiste à intégrer le signal reçu de façon cohérente, sur un temps $T_c$ limité par le temps de cohérence de la cible, typiquement de l'ordre de 50 ms, puis à effectuer une post intégration de l'amplitude du signal sur un temps $T_{nc}$ limité par le temps de présence de la cible dans le faisceau

$$T_{nc}=(T_{ex} \theta_{g3db} / \Omega_g)=T_{ex} \lambda^2/L_eH_e\Omega_g$$

Chaque antenne d'émission 51 et de réception 52 possède une surface S correspondant à un gain

$$Ge=Gr =4\pi LeHe/\lambda^2=4\pi LrHr/\lambda^2$$

Ces paramètres étant fixés, le bilan de portée du radar est déterminé par la puissance moyenne reçue et par le niveau de bruit dans le récepteur :

- La puissance moyenne reçue $P_{mr}$ peut être donnée par la formule

$$P_{mr} = \frac{P_{me}GeGr\lambda^2\sigma}{(4\pi)^3 R^4 L}$$

ou encore en exprimant les gains d'antenne en fonction des dimensions de ces antennes :

$$P_{mr} = \frac{P_{me}H_eL_eH_rL_r\sigma}{4\pi R^4 L}$$

Dans les formules précédentes,

Pe représente la puissance émise,
Ge représente le gain d'antenne à l'émission,
Gr représente le gain d'antenne à la réception,
$\lambda$ représente la longueur d'onde,
$\sigma$ représente la surface équivalente de la cible,
R représente la distance de la cible,
L représentent les pertes hyperfréquence,
$H_e$ représente la hauteur de l'antenne d'émission,
$H_r$ représente la hauteur de l'antenne de réception,

Le représente la largeur de l'antenne d'émission,

$L_r$ représente la largeur de l'antenne de réception,

Dans la suite de la description, les mêmes symboles représenteront les mêmes caractéristiques.

• Le niveau de bruit dans le récepteur après intégration cohérente peut être donné par la formule

$$N = FkT/T_e$$

Où :

F représente le facteur de bruit du récepteur,

kT représente la densité de bruit,

Te représente le temps d'intégration cohérent, généralement limité par le temps de cohérence de la cible

• Le rapport signal à bruit en sortie intégration cohérente peut être donné par la formule :

$$SNR = \frac{P_{mr} T_e}{FkT}$$

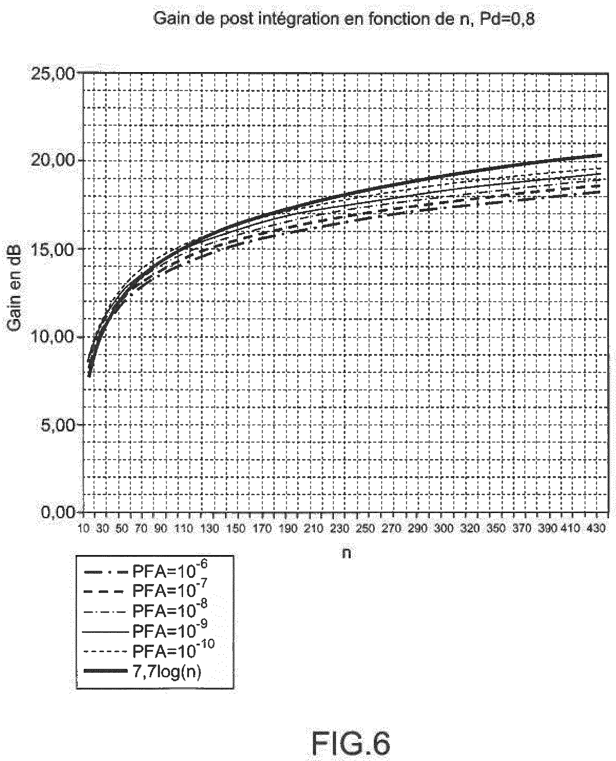

• En sortie post intégration, en supposant une intégration sur un nombre $N_{nc} \# T_{nc}/T_e$, typiquement compris entre 10 et 50 et pour une probabilité de fausse alarme typiquement inférieure ou égale à $10^{-6}$ le gain de post-intégration $G_{nc}$ peut être approximé pour une cible de fluctuation Swerling 1 ou non fluctuante par $G_{nc} = N_{nc}^{0,77}$, comme le montre les courbes représentées figure 6.

Dans ces conditions, le rapport signal à bruit peut s'écrire :

$$SNR = \frac{P_{mr} T_e N_{nc}^{0,77}}{FkT}$$

soit en approximant Nnc par Nnc= Tnc/Te

$$SNR = \frac{P_{mr} T_e (T_{nc}/T_e)^{0,77}}{FkT}$$

ou encore, comme $T_{nc} = T_{ex} \lambda^2 / L_e H_e \acute{\Omega}_g$

$$SNR = \frac{P_{mr} T_e}{FkT} \left( \frac{T_{ex} \lambda^2}{L\, H_e \Omega_g T_e} \right)^{0,77}$$

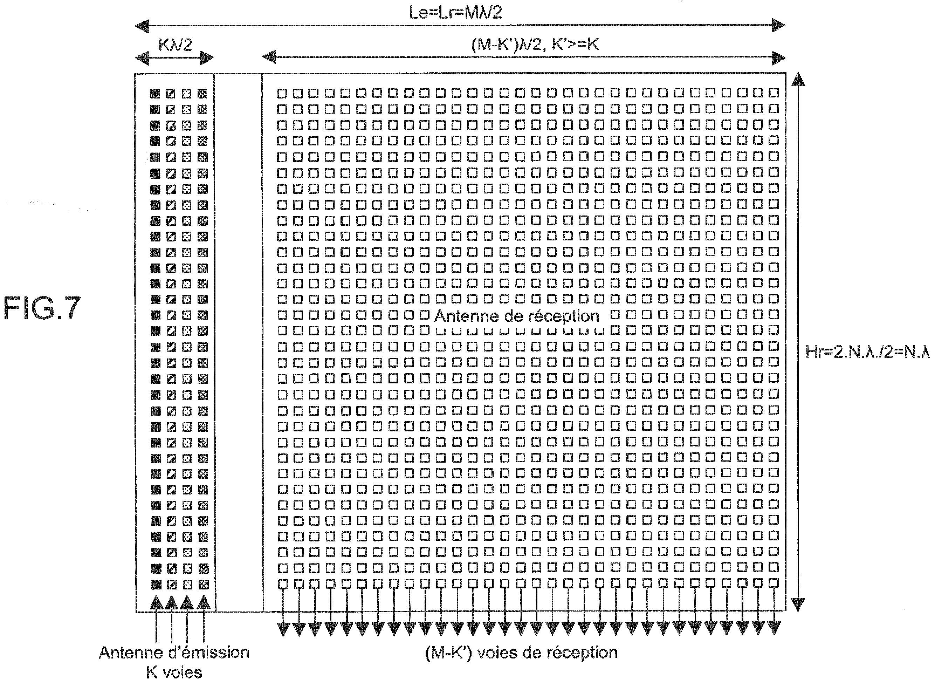

Afin de comparer le bilan de portée d'un radar selon l'invention avec celui d'un radar LPI conventionnel on considère un mode de réalisation de l'invention dans lequel la structure rayonnante a la même surface que celui du radar LPI conventionnel représenté figure 5 mais dont les zones d'émission et de réception sont répartie différemment. La figure 7 illustre un exemple d'agencement de la structure antennaire 10 considérée. On considérera la même forme d'onde et la même puissance émise pour les deux types de radar. Contrairement à un radar LPI conventionnel, la structure antennaire 10 du dispositif 1 selon l'invention n'est pas directive à l'émission.

Cette structure antennaire comprend K sous réseaux verticaux d'émission de hauteur $N_\lambda$, soit 2.N éléments rayonnants espacés de $\lambda/2$, émettant des signaux différents dans des bandes $\Delta F$ distinctes et (M-K') sous réseaux verticaux de réception indépendants, avec K'≥K.

Si on considère un mode de réalisation particulier dans lequel K'=K, toute la surface disponible de la structure antennaire est occupée par des éléments rayonnants, ce qui optimise le gain en réception.

Dans d'autres modes de réalisation, on peut être amené à limiter le nombre de voies de réception ce qui peut amener à choisir K'>K.

L'ouverture de l'antenne d'émission selon l'invention est donnée par les formules :

$$\text{en gisement } \theta_{g3db}=\pi/2 \text{ (radians)}$$

$$\text{en élévation } \theta_{e3db}=1/N \text{ (radians)}$$

La puissance moyenne reçue par un radar selon l'invention est affectée de la diminution du gain de l'antenne d'émission dans un rapport :

$$\Delta_{ge} = 10\log(\frac{\frac{2}{M}\frac{2}{N}}{\frac{\pi}{2}\frac{1}{N}}) = 10\log(\frac{8}{M\pi})$$

En réception le gain d'antenne est augmenté du rapport des surfaces du fait du doublement de la hauteur de l'antenne de réception par rapport à un radar LPI conventionnel. Par exemple, en prenant K=K'=1, le gain de l'antenne de réception est augmenté sensiblement de 3 dB :

$$\Delta_{gr}=+3 \text{ dB}$$

Comme pour le radar LPI conventionnel, le traitement radar adapté consiste à intégrer le signal reçu de façon cohérente sur un temps $T_c$ limité par le temps de cohérence de la cible, typiquement de l'ordre de 50 ms, puis à effectuer une post intégration de l'amplitude du signal sur un temps $T_{nc}$ limité par le temps de présence de la cible dans le faisceau. Le temps d'intégration cohérent est inchangé.

Par contre, compte tenu de l'ouverture de l'antenne d'émission, à condition que la cible reste dans la cellule de résolution du radar suffisamment longtemps, le temps de post intégration peut être augmenté dans un rapport voisin du rapport des ouvertures d'antenne, soit M.$\pi$/8, ce qui conduit à une augmentation du gain de post intégration voisin de :

$$\Delta_{gpi} = 7,7\log(\frac{M\pi}{8})$$

Finalement, la différence de rapport signal à bruit en sortie du traitement radar s'établit à :

$$\Delta SNR = -\Delta_{ge} + \Delta_{gr} + \Delta_{gpi}$$

soit

$$\Delta SNR = 3 - 2,3\log(\frac{M\pi}{8})$$

Le gain en discrétion du radar est évalué à partir de la différence des PIRE, soit :

$$\Delta_{PIRE} = \Delta_{ge} = 10\log(\frac{8}{M\pi})$$

Ces résultats montrent que pour des valeurs de M de l'ordre de quelques dizaines, le radar selon l'invention présente sensiblement le même bilan de portée qu'un radar LPI conventionnel. Par contre, sa puissance isotrope rayonnée est diminuée dans des proportions importantes.

A titre de comparaison, le tableau de l'annexe 1 présente des exemples de performance d'un radar conventionnel et celles d'un exemple de réalisation d'un radar selon l'invention.

Dans cet exemple on a considéré un radar LPI classique en bande X ayant un domaine de couverture en gisement de 90° et un temps d'exploration de 6,4 secondes. Les dimensions de l'antenne considérée sont 48 cm en hauteur et 60 cm en largeur.

Le radar selon l'invention ne comprend qu'une voie d'émission (K=1), et le nombre de sous réseaux en réception est volontairement limité à 32, ce qui correspond au cas K'=8 par rapport au nombre de sous réseau du radar LPI.

Dans les deux cas, on considère un temps d'intégration cohérent de 30 ms.

Dans de telles conditions, la sensibilité du radar selon l'invention est plus faible de 2 dB par rapport à celle d'un radar LPI conventionnel. Une perte de 2 dB en sensibilité correspond à une diminution de la portée radar de l'ordre de 10%. Par contre, la discrétion du radar selon l'invention est augmentée de 13 dB par rapport au radar LPI considéré. Ceci signifie que la distance d'interception du signal radar pour un dispositif ESM d'une sensibilité donnée, est multipliée par un facteur supérieur à quatre.

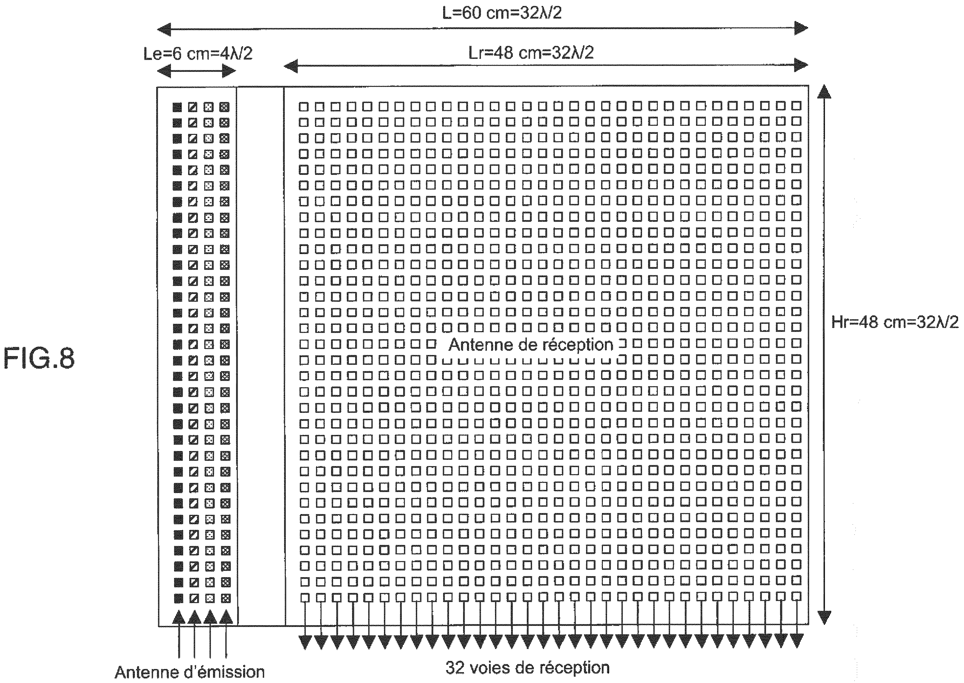

Il est à noter que ces résultats peuvent encore être améliorés en utilisant plusieurs voies d'émission émettant des signaux dans des bandes de fréquences distinctes, avec un écart entre ces bandes de fréquences au moins égal à la largeur de bande de réception d'un détecteur ESM. Ce cas est représenté sur la figure 8, pour K=4.

En référence à la figure 8 un mode de réalisation préférentiel du dispositif de détection suivant l'invention est présenté.

Dans cette configuration nullement limitative, la partie émission de la structure antennaire 10 comprend quatre sous réseaux 31 verticaux de hauteur Nλ et la partie réception 32 sous réseaux 32 verticaux.

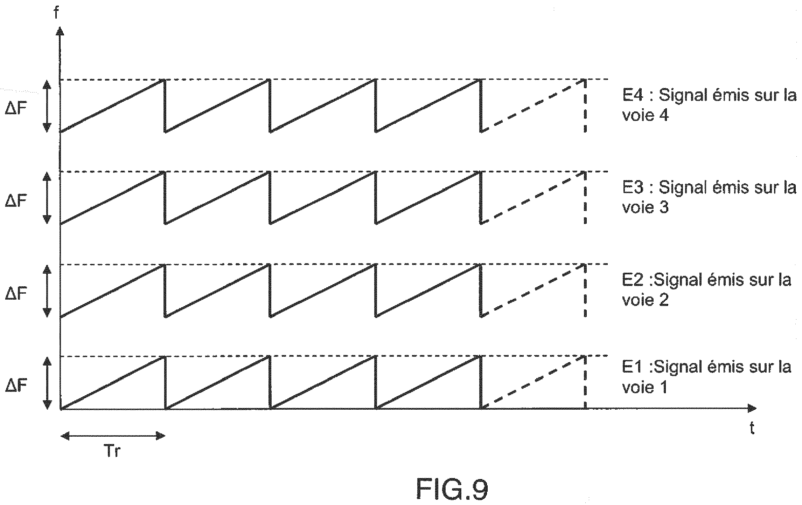

La forme d'onde à l'émission est réalisée par exemple à l'aide de quatre signaux de type FMCW identiques, mais espacés en fréquence d'une valeur supérieure ou égale à la bande de modulation élémentaire, selon le schéma de principe de la figure 9. Les signaux sont synchronisés et cohérents entre eux.

A la réception, les signaux reçus sur chaque sous réseau 32 sont séparés en fonctions des sous réseaux d'émission par exemple par filtrage passe bande.

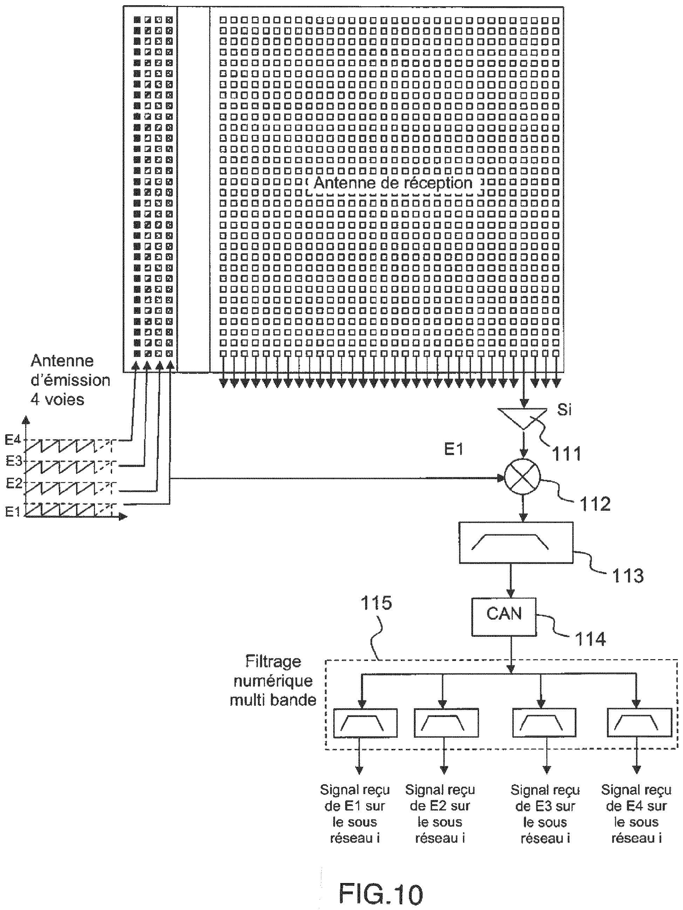

En référence à la figure 10, sur chaque sous réseau de réception, les signaux reçus sont amplifiés par un amplificateur 111 puis sont démodulés 112 par un des signaux d'émission. Les signaux d'émission étant identiques, au décalage fréquentiel près, l'un quelconque des signaux d'émission peut être choisi pour la démodulation. Suivant un autre mode de réalisation l'image du signal d'émission transposée en fréquence est utilisée pour la démodulation des signaux de réception.

Après démodulation, les signaux sont filtrés de façon à limiter la bande de réception. Ce filtrage 113 peut par exemple être réalisé par un filtre passe bande, les signaux sont convertis en numérique à l'aide d'un convertisseur analogique numérique ou CAN 114. Les signaux numérisés sont ensuite filtrés 115 à travers des filtres passe bande de façon à séparer les différents signaux provenant des différents sous réseaux d'émission.

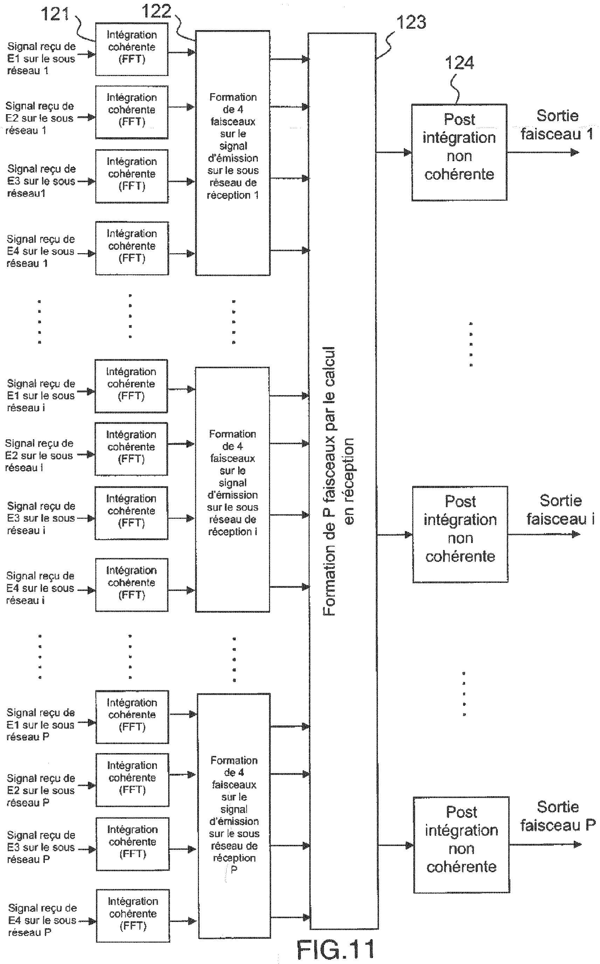

La figure 11 représente un synoptique d'opérations pouvant être effectuées par les moyens de réception après séparation des signaux.

Pour chaque sous réseaux de réception, après séparation 115, les signaux provenant des différents émetteurs subissent les traitements classiques d'intégration temporelle cohérente 121 par exemple par transformée de Fourier rapide ou FFT pour Fast Fourier Transform selon le sigle anglo-saxon. L'intégration 121 peut être effectuée sur l'axe distance, sur l'axe Doppler ou sur les deux axes.

De façon à refocaliser le faisceau d'émission, les signaux sont ensuite sommés de façon cohérente 122. Ceci revient à former quatre faisceaux sur le signal d'émission sur chaque sous réseau de réception. Une formation de faisceaux par le calcul 123 en réception est ensuite réalisée en sommant les sous réseaux de réception de façon cohérente temporellement et spatialement. Ce traitement 123 est effectué sur chaque faisceau formé.

Chaque faisceau formé subit ensuite une post intégration non cohérente 124. Les signaux de chaque faisceau sont ainsi sommés en amplitude sur un certain nombre de coups au but.

Par rapport à un radar ne comportant qu'une voie d'émission comme par exemple représenté figure 3, à puissance totale émise constante, la PIRE d'un dispositif de détection 1 selon l'invention est sensiblement égale et la sensibilité de détection est peu modifiée puisqu'après réflexion sur la cible, les échos des signaux émis par les quatre voies sont sommés de façon cohérente.

Par contre, avec un dispositif de détection selon l'invention, la PIRE apparente dans un détecteur ESM est divisée par quatre, puisque l'énergie rayonnée par le dispositif de détection se trouve répartie dans quatre filtres de réception ESM distincts. Ce raisonnement sous entend que le détecteur l'ESM intègre le signal émis par le dispositif selon l'invention sur une bande maximale correspondant à la bande émise par ledit dispositif de détection. De ce fait le dispositif selon l'invention est plus discret qu'un radar LPI conventionnel.

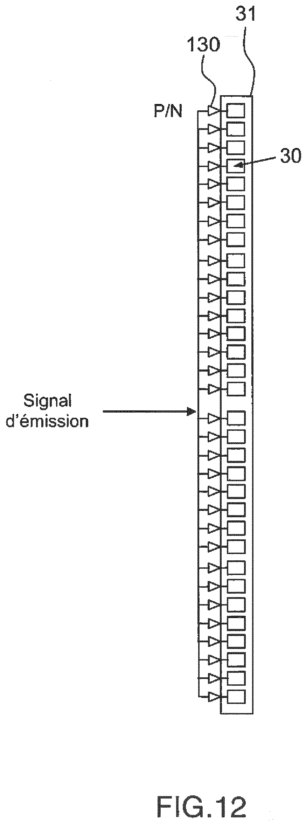

Selon un mode de réalisation, chaque élément rayonnant 30 à l'émission comporte un amplificateur de puissance 130 ou HPA pour High Power Amplifier selon la terminologie anglo-saxonne comme illustré figure 12. Suivant un autre mode de réalisation, l'amplificateur de puissance est associé à un groupe d'éléments rayonnants à l'émission. De façon avantageuse, en alimentant ou non certains amplificateurs, ou en faisant varier leur alimentation, il est possible de faire varier la puissance d'émission totale. De la même manière, il est également possible de moduler l'ouverture du diagramme.

Si on considère un sous réseau d'émission avec N éléments rayonnants, la portée accessible avec n éléments rayonnants actifs en émission (n≥N) peut s'exprimer en fonction de la portée maximale (N émetteurs actifs) de la façon suivante :

$$D_n = rD_N \quad \text{avec} \quad r = \sqrt{\frac{n}{N}}$$

Si tous les éléments rayonnants de l'émetteur fonctionnent :

$$G_e = \frac{4\pi}{\lambda^2} H_e L_e = \frac{4\pi}{\lambda^2}\left(N\frac{\lambda}{2}\right)\left(\frac{\lambda}{2}\right) = N\pi$$

$$P_e G_e = P_e N\pi$$

et

$$D_N = \sqrt[4]{\frac{P_e G_e}{SNR}} = \sqrt[4]{\frac{P_0 N\pi}{SNR}}$$

Si seuls n éléments rayonnants de l'émetteur sur N fonctionnent, alors :

$$G'_e = \frac{4\pi}{\lambda^2} H_e L_e = \frac{4\pi}{\lambda^2}\left(n\frac{\lambda}{2}\right)\left(\frac{\lambda}{2}\right) = n\pi$$

donc

$$P'_e G'_e = \left(P_e \frac{n}{N}\right)n\pi = P_e \frac{n^2\pi}{N}$$

donc

$$D_n = \sqrt[4]{\frac{P'_e G'_e}{SNR}} = \sqrt[4]{\frac{P_e n^2\pi}{SNR.N}}$$

Finalement, $D_n$ peut s'écrire en fonction de $D_N$ :

$$D_n = \sqrt[4]{\frac{P_e N\pi}{SNR}}\sqrt[4]{\frac{n^2}{N^2}} = D_N\sqrt{\frac{n}{N}}$$

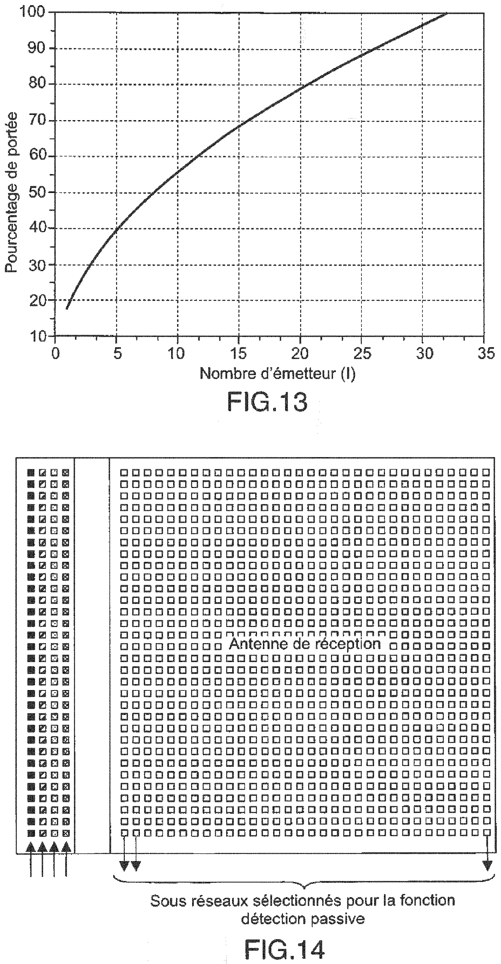

A titre d'exemple, la figure 13 représente la variation de la portée radar en fonction du nombre d'éléments rayonnants de l'émetteur alimentés.

Afin de comparer les performances d'un radar actif selon l'invention avec celle d'un radar LPI conventionnel, on considère un radar en bande X ayant les caractéristiques suivantes :

- portée de 10 km sur une Surface Équivalente Radar ou SER de 1m$^2$,
- dimensions d'antenne limitées à 60 cm en horizontal et à 48 cm en vertical,
- domaine de recherche de 90° en gisement, avec un temps d'exploration de 6,4 secondes,
- forme d'onde à l'émission du type FMCW.

Un dimensionnement selon les caractéristiques radars LPI conventionnelles conduit à une antenne comprenant un réseau d'émission et un réseau de réception identiques et superposés, de dimensions 60 cm en horizontal et 24 cm en vertical comme illustré figure 5. Cette antenne balaye l'espace en gisement sur 90°, en émettant une forme d'onde continue FMCW périodique avec une bande de modulation de 1 MHz, une période de modulation de l'ordre de 1 ms et à une puissance d'émission p égale à 1 Watt, soit 30 dBm. Le temps d'intégration cohérent est de l'ordre de 30 ms, et le temps de post intégration non cohérent résultant de l'ouverture du faisceau d'antenne et du temps d'exploration est de 200 millisecondes, ce qui permet un nombre de post intégration de 6, correspondant à un gain de post intégration de l'ordre de 6 dB.

Selon l'invention, il est proposé d'effectuer la même fonction avec une structure antennaire fixe comprenant à l'émission quatre sous réseaux indépendants de hauteur sensiblement égale à 48 cm, constituée à partir de 32 dipôles d'ouverture 90° par 90° superposés et distants de 1,5 cm dans le plan vertical.

A la réception, l'antenne dispose de 32 sous réseaux de réception également constitués de 32 dipôles d'ouverture 90° par 90° superposés et distants de 1,5 cm dans le plan vertical. Les signaux reçus sur ces sous réseaux de réception sont sommés de façon cohérente dans le récepteur, par traitement classique de formation de faisceau.

La structure antennaire ainsi constituée est similaire à celle de la figure 8.

Compte tenu des différences de gain d'antenne à l'émission : -13 dB et à la réception : +2 dB, à puissance totale émise constante, le rapport signal à bruit pour chaque faisceau formé après intégration cohérente est diminué de 11 dB par rapport au radar LPI conventionnel. Par contre, la post-intégration s'effectue sur un temps de 3,2 secondes au lieu de 200 millisecondes, soit sur un nombre de post intégration de 104, ce qui donne un gain de post intégration de 14,5 dB d'après la courbe de la figure 6, soit une amélioration du gain de post-intégration de 8,5 dB.

A puissance émise constante, la sensibilité est donc diminuée d'environ 2,5dB. Ceci peut être compensé en augmentant dans un rapport sensiblement équivalent la puissance d'émission, en émettant une puissance totale de 2 Watt à partir de quatre sous réseaux émettant chacun 500 milliwatt, soit 27dbm par sous réseau.

Ainsi le bilan de portée radar est assuré, et la puissance rayonnée vue dans un filtre de réception de l'intercepteur est diminuée de 16dB par rapport à un radar LPI classique émettant la même puissance totale.

Pour un intercepteur ESM donné, la distance d'interception est ainsi augmentée dans un rapport supérieur à 6.

La forme d'onde à l'émission est réalisée, par exemple, avec quatre signaux FMCW identiques à celui émis par le radar LPI de référence, mais espacés en fréquence d'une valeur supérieure à la bande de modulation élémentaire, selon le schéma de principe de la figure 9. La bande de modulation de fréquence peut, par exemple, être choisie égale à 1 MHz, et les signaux d'émission peuvent être décalés entre eux de 10 MHz.

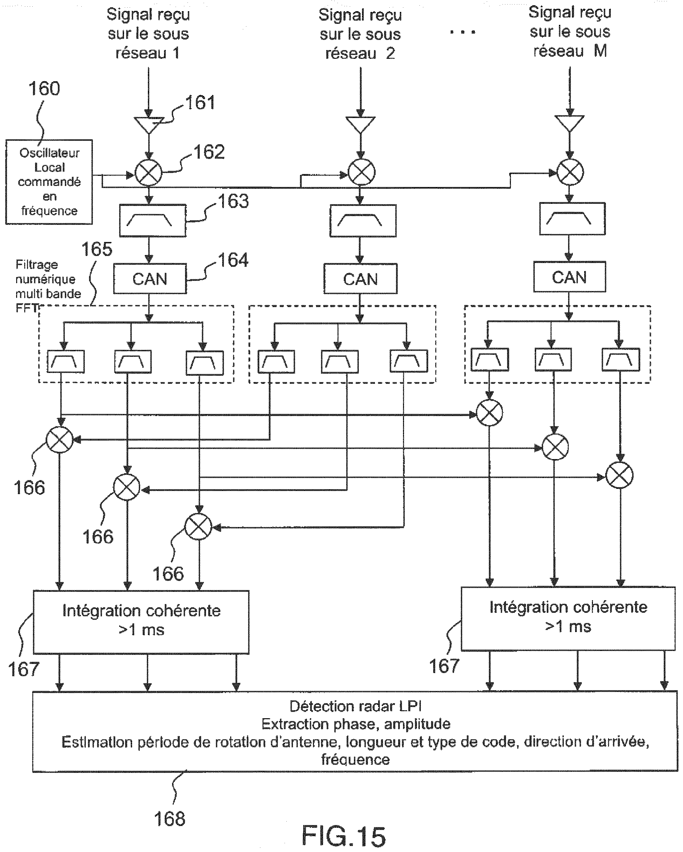

En référence aux figures 14 et 15, le fonctionnement de la fonction intercepteur en mode passif ou MRE va être présenté.

La fonction intercepteur en mode passif s'effectue en utilisant seulement de la partie réception de la structure antennaire en utilisant les signaux reçus sur au moins trois sous réseaux de réception 32. Le groupe formé d'au moins trois sous réseau va former un système d'interférométrie lacunaire c'est à dire un système qui ne respecte pas les conditions de Shannon sur l'échantillonnage spatial.

Suivant un mode de réalisation préférentiel, les trois sous réseaux 32 choisis sont d'une part les deux sous réseaux 1 et M placés aux deux extrémités de l'antenne de réception, et d'autre part le voisin immédiat de l'un des sous réseaux aux extrémités de l'antenne de réception. A titre d'exemple, la figure 15 illustre un mode de réalisation dans lequel les deux sous réseau d'indice 1, 2 et M sont utilisés.

Le système d'interférométrie comporte deux bases. Dans le cas d'un système d'interférométries à trois sous réseaux, une première base d'interférométrie est formée par les deux sous réseaux adjacents. Cette base a la particularité d'être non ambigüe. En effet chaque sous réseau est espacé d'une distance égale à la moitié de la longueur d'onde, il est donc possible de d'obtenir la direction d'arrivée du signal reçu par la mesure de phase. Par contre, du fait que les deux sous réseaux sont adjacents donc peu étendus, cette base est peu précise. La deuxième base est formée par les deux sous réseaux placés aux deux extrémités de la structure antennaire. Cette seconde base est très précise car très étendue, par contre elle est ambigüe. L'utilisation de ces deux bases d'interférométrie va permettre d'avoir des mesures de direction d'arrivée du signal reçu très précises et non ambigües.

Cette méthode est efficace dans le cas d'une bande passante de l'ordre de 20% de la fréquence de fonctionnement centrale de l'antenne, typiquement 2 GHz en bande X.

Bien entendu, il est possible d'étendre ce principe en prenant en compte un nombre supérieur de sous réseaux.

De façon avantageuse, cela permet de lever plus facilement l'ambiguïté mais cela complexifie le système.

Suivant un mode de réalisation particulier, la sélection des sous réseaux de réception peut être modifiée de façon dynamique, par exemple au niveau du traitement numérique, pour résoudre les problèmes d'ambiguïté. Ce mode de réalisation peut être intéressant, par exemple, dans le cas d'une importante densité de signaux reçus.

La figure 15 présente un exemple de réalisation du traitement de la fonction MRE suivant l'invention.

Dans cet exemple on considère les trois sous réseaux 32 d'indice 1, 2 et M comme illustré figure 14. Chaque signal issu de ces trois sous réseaux après limitation de la bande de fréquence de réception est amplifié 161 par exemple par un amplificateur faible bruit puis démodulé 162 à l'aide d'un oscillateur local commandé en fréquence 160. Après démodulation 162, les signaux sont de nouveau filtrés 163 par exemple à l'aide d'un filtre passe bande de façon à réduire la bande de réception en fréquence intermédiaire puis numérisés 164 à l'aide d'un convertisseur analogique numérique. Les signaux numérisés sont ensuite séparés par filtrage numérique 165 en différentes sous bandes, puis inter corrélés deux à deux 186 c'est-à-dire entre deux fois deux voies de la structure antennaire. Dans l'exemple de la figure 15, la corrélation croisée ou cross corrélation suivant l'expression anglo-saxonne, s'effectue en démodulant les signaux issus du premier sous réseau avec ceux du deuxième sous réseau et ceux issus du troisième sous réseaux par rapport aux signaux issus du premier sous réseau. Bien entendu, cette méthode peut se généraliser au cas comportant plus de sous réseaux. Les signaux subissent ensuite une étape d'intégration cohérente 167 sur un temps long, typiquement de l'ordre d'environ 1 ms avant un traitement classique 168 de détection de radars et d'extraction des paramètres de ce ou ces radars cibles détectés.

En référence à la figure 14, on considère un mode de réalisation particulier dans lequel la fonction MRE utilise trois des sous réseaux 32 de la structure antennaire.

Le gain d'antenne de chaque sous réseau peut être estimé à 17 dB et le facteur de bruit F à 5 dB. La bande passante en fréquence intermédiaire est par exemple de 100 Mhz

Si on fixe au niveau du filtrage numérique multibande, trois largeurs de bande en réception : $B_{FI}$ = 50 Mhz, 12,5 Mhz et 781 kHz, le niveau de bruit dans chacune de ces sous bandes peut être évalué à :

$$N = F + 10\log(B_{FI}) + 10\log(kT)$$

Pour kT =-174 dBm/Hz, on obtient respectivement pour chaque largeur de bande des filtres de réception : N= -92 dBm, -98 dBm et -110 dBm

Par ailleurs la bande vidéo Bv correspondant à une durée de 1 ms d'intégration cohérente est de 1 KHz

On suppose 3 dB de pertes de traitement avant l'inter corrélation et 3 dB de pertes également après inter corrélation, et un rapport signal à bruit nécessaire à la détection SNRs=18 dB. Dans ces conditions, le rapport signal à bruit nécessaire à l'entrée de l'intercepteur pour dépasser le seuil de détection peut être estimé à partir de l'équation suivante :

$$SNRs = \frac{(\frac{SNR_e}{2})^2}{1 + SNR_e} \frac{B_{FI}}{2Bv} \approx (\frac{SNR_e}{2})^2 \frac{B_{FI}}{2B_v}$$

d'où :

$$SNR_e = 2\sqrt{SNR_s \, 2 \frac{B_v}{B_{FI}}}$$

soit en dB :

$$SNR_e(dB) = 3 + \frac{SNR_s(dB)}{2} + 5\log(2) + 5\log(\frac{B_v}{B_{FI}})$$

Ceci conduit à un rapport signal à bruit respectivement égal à :

$$SNR_e(dB) = -10 \text{ dB}, -7 \text{ dB et } -1 \text{ dB}$$

Soit à un niveau de signal minimum à l'entrée du récepteur $S_{min}$ respectivement égal à : -120dBm, -105 dBm et,-93 dBm.

Compte tenu du gain d'antenne de chaque sous réseau en réception de 17 dB, on obtient une sensibilité respectivement de -137 dBmi,-122 dBmi,-110 dBmi, pour les trois largeurs de bande de réception.

Ces niveaux de sensibilité sont de très loin supérieurs aux valeurs habituelles des systèmes d'interception, et permettent la détection de radars LPI à très grande distance. A titre d'exemple, un radar en bande X émettant une puissance de 1milli watt avec un gain d'antenne de 25 dB génère à 10 km une densité de puissance isotrope rayonnée de l'ordre de -107 dBm au niveau de l'antenne de l'intercepteur.

Si on compare le synoptique de la figure 15 avec celui des figures 10 et 11, on peut remarquer que le synoptique de la fonction radar passif peut s'intégrer dans celui de la fonction radar actif. Les circuits utilisés en réception peuvent donc être partagés par les fonctions radar actif et radar passif. De façon avantageuse, cela permet de simplifier l'architecture du dispositif de détection selon l'invention et de minimiser le volume de l'électronique à mettre en oeuvre.

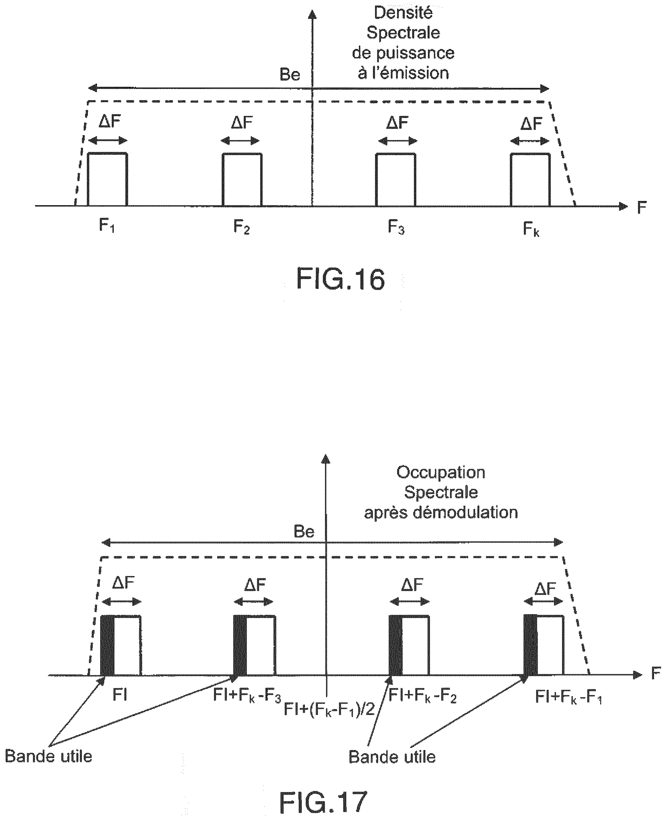

La figure 16 présente un exemple de mode de réalisation d'un dispositif de détection 1 selon l'invention intégrant à la fois la fonction radar actif et la fonction radar passif ou MRE.

En mode actif la fonction radar utilise la partie émission et réception de la structure antennaire ainsi que les moyens d'émission et de réception du dispositif de détection 1 selon l'invention.

Les moyens d'émission comprennent au moins K générateurs de forme d'onde 191 pilotés par un même circuit pilote et synchronisation 192. Les générateurs de forme d'onde 191 génèrent des signaux d'émission de forme identiques centrés sur des fréquences différentes et occupant des bandes de fréquences disjointes. De façon préférentielle les signaux sont des signaux continus modulés en fréquence (FMCW) périodiques et décalés en fréquence les uns par rapport aux autres comme illustré figure 8. Les différents signaux d'émission ont tous la même bande de modulation $\Delta F$ et sont centrés sur les fréquences $F_1$ à $F_k$. L'ensemble des signaux d'émission couvre une bande de fréquence de largeur Be comme illustré figure 14.

A la réception, les signaux issus d'un des générateurs 192 utilisés pour l'émission, par exemple le $K^{ième}$, sont transposés en fréquence dans un mélangeur à bande latérale unique 193 (BLU) par le signal de fréquence FI en sortie de l'oscillateur pilote 191, de façon à générer une forme d'onde centrée sur $FI+F_k$ ou $FI-F_k$, qui sera utilisée pour démoduler le signal reçu.

Le signal reçu au niveau d'un sous réseau de réception 32 comprend K composantes, de largeur de bande $\Delta F$, et respectivement centrées sur les fréquences $F_1$ à $F_k$.

Après démodulation par exemple à l'aide d'un mélangeur 196, les différentes composantes du signal sont centrées sur $F_I-F_1+F_K$, $F_I-F_2+F_K$, $F_I$, et occupent chacune une bande de fréquence $\Delta F$, l'ensemble couvrant une bande Be, comme illustré à la figure 17.

En référence à la figure 17, il est à noter que seule une partie limitée de chaque sous bande correspond au signal utile. En effet, selon le principe du radar FMCW, si la durée de la rampe de fréquence est T et la distance instrumentée maximum Dmax, la fréquence de battement maximum entre le signal émis et le signal reçu est :

$$2Dmax\ \Delta F/cT,$$

où c est la vitesse de la lumière, avec $2Dmax/cT \ll 1$

Par exemple, pour Dmax=10 km et T=1 ms, $2Dmax/cT=0,066$, et la bande utile est $0,066\Delta F$

Les signaux sont ensuite filtrés dans un filtre passe-bande 198 de bande passante supérieure ou égale à Be, accordé sur la fréquence centrale $FI+(F_k-F_1)/2$, puis numérisés 199 avec une fréquence d'échantillonnage supérieure ou égale à 2Be. La séparation des signaux correspondant aux différents signaux d'émission s'effectue au niveau du traitement numérique par filtrage numérique 200 autour de chaque sous bande d'intérêt.

En mode passif seul les moyens de réception et la partie réception de la structure antennaire 10 sont utilisés.

Dans ce mode, seul un générateur de forme d'onde 192 est actif, par exemple le $k^{ième}$. Les signaux en sortie de ce générateur de forme d'onde sont utilisés pour démoduler le signal reçu provenant des émetteurs radars présents dans le faisceau de l'antenne de réception de l'intercepteur. La bande passante du récepteur étant limitée et le générateur de forme d'onde 192 est piloté en fréquence de façon à scanner le domaine fréquentiel à analyser.

De façon avantageuse, le dispositif de détection selon l'invention, en intégrant les deux fonctions de radar actif et passif permet d'optimiser ses coûts, son volume et sa masse.

L'antenne du dispositif étant fixe, il n'y a pas de génération de bruit lié aux mécanismes de rotation, ce qui renforce la discrétion acoustique du système. De plus elle ne nécessite pas de joint tournant entre l'aérien et le récepteur, ce qui permet de supprimer une contrainte comme par exemple lorsque les signaux à transmettre sont à large bande.

Le dispositif étant fixe, la couverture de l'ensemble du domaine angulaire à surveiller peut s'effectuer instantanément, ce qui favorise la probabilité d'interception et réduit le temps d'acquisition. De même, l'absence de servomécanismes apporte une meilleure fiabilité par rapport aux autres systèmes existants.

Compte tenu à la fois des capacités d'agilité de faisceau, de forme d'onde et de fréquence, le système est très peu sensible aux brouillages, qu'ils soient volontaires ou non.

Dans le cas d'une antenne fixe à faces planes, la probabilité d'être éclairée en spéculaire est réduite, ce qui limite considérablement la surface équivalente de l'antenne et renforce la discrétion électromagnétique du système.

D'autre part, le dispositif selon l'invention peut être utilisé dans un vaste domaine d'applications, autres que l'interception électromagnétique, comme par exemple l'aide à l'appontage pour hélicoptère ou encore l'aide à l'accostage ou au ravitaillement pour navire. De façon avantageuse, il peut également être utilisé comme radar passif en utilisant les émissions d'opportunité ou en collaboration avec un ou plusieurs illuminateurs.

Annexe 1

| | | |
|---|---|---|
| **Radar LPI conventionnel** | nombre de sous réseaux en gisement M | 40 |
| | longueur antenne en gisement (cm) | 60 |
| | nombre de sous réseaux en élévation N | 16 |
| | ouverture antenne en gisement (rd) | 0,05 |
| | ouverture antenne en élévation (rd) | 0,13 |
| | gain d'antenne | 30,03 |
| | temps de présence dans le lobe (sec) | 0,20 |
| | nombre de points de post intégration | 6 |
| | gain de post-intégration (db) | 5,99 |
| | | |
| **Radar LPI selon l'invention** | nombre de sous réseaux en gisement antenne d'émission | 1 |
| | longueur sous réseau antenne en gisement (cm) | 1,5 |
| | ouverture sous réseau antenne en gisement (rd) | 1,57 |
| | gain d'antenne d'émission | 17,02 |
| | nombre de sous réseaux en élévation | 32,00 |
| | ouverture antenne en élévation (rd) | 0,06 |
| | nombre de sous réseaux en gisement antenne réception | 32,00 |
| | temps de présence dans le lobe (sec) | 3,21 |
| | nombre de points de post intégration | 107 |
| | gain de post-intégration (db) | 15,03 |
| | *surcroît de gain de post intégration LPI* | *9,03* |
| | *perte de gain en émission/LPI* | *-13,01* |
| | *surcroît de gain en gisement en réception* | *2,04* |
| | | |
| | *Bilan de sensibilité (db)* | *-1,93* |
| | *Bilan de discrétion (db)* | *-13,01* |

**Revendications**

1. Dispositif de détection électromagnétique actif et passif à faible probabilité d'interception comportant une structure antennaire fixe, des moyens d'émission et des moyens de réception,

    - la structure antennaire étant formée d'une pluralité d'éléments rayonnants regroupés en sous réseaux identiques et comprenant au moins un sous réseau d'émission et au moins trois sous réseaux de réception distincts des sous réseaux d'émission,
    - les moyens d'émission étant aptes à générer une forme d'onde continue ou quasi continue de faible puissance crête non focalisée dans un plan et à émettre cette forme d'onde via le ou les sous réseaux d'émission,
- les moyens de réception étant aptes à détecter les cibles après formation d'une pluralité de faisceaux directifs à partir des signaux reçus sur les sous réseau de réception de la structure antennaire,
- les moyens de réception étant aptes à réaliser l'interception de signaux radar provenant d'autres sources radars par un traitement de corrélation croisée entre les signaux reçus sur au moins trois sous réseaux de réception, le groupe formé d'au moins trois sous réseaux de réception réalisant un système d'interférométrie lacunaire ne respectant pas les conditions de Shannon sur l'échantillonnage spatial,

ledit dispositif étant **caractérisé en ce que** les moyens de réception sont également aptes à effectuer une localisation angulaire des sources d'émission radar potentielles par interférométrie de phase, les sous réseaux de réception utilisés formant au moins une première base d'interférométrie ambiguë et une seconde base d'interférométrie non ambigüe.

2. Dispositif selon la revendication précédente **caractérisé en ce que** la structure antennaire comprend au moins deux sous réseaux d'émission et **en ce que** les moyens d'émission sont aptes à générer des signaux ayant des bandes de fréquences différentes et à émettre ces signaux sur des sous réseaux d'émission différents.

3. Dispositif selon une des revendications précédentes **caractérisé en ce que** les moyens d'émission sont aptes à générer des signaux d'émission de forme identique centrés sur des fréquences différentes et occupant des bandes de fréquences disjointe.

4. Dispositif selon une des revendications précédentes **caractérisé en ce que** les signaux d'émission sont de forme continue ou quasi continue et modulés en fréquences.

5. Dispositif selon une des revendications précédentes **caractérisé en ce que** les moyens de réception sont aptes à démoduler les signaux reçus par l'un des signaux d'émission.

6. Dispositif selon une des revendications 1 à 4 **caractérisé en ce que** les moyens de réception sont aptes à démoduler les signaux reçus par l'un des signaux d'émission après transposition en fréquence de ce dernier.

7. Dispositif selon une des revendications 2 à 6 **caractérisé en ce que** les moyens de réception sont aptes à séparer les signaux reçus, après démodulation, en sous signaux de réception par filtrage passe bande, ledit filtrage étant effectué en fonction des signaux d'émission.

8. Dispositif selon la précédente **caractérisé en ce que** les moyens de réception sont aptes à intégrer temporellement de façon cohérente les différents signaux de réception, l'intégration de chaque sous signal s'effectuant de façon séparée.

9. Dispositif selon une des revendications 7 ou 8 **caractérisé en ce que** les moyens de réception sont aptes à intégrer les sous signaux de réception spatialement et de façon cohérente afin de former des faisceaux directifs dans un plan.

10. Dispositif selon la revendication précédente **caractérisé en ce que** après intégration cohérente temporelle et spatiale, les moyens de réception sont aptes à post intégrer les sous signaux de réception de façon non cohérente pendant tout le temps disponible pour l'exploration du domaine angulaire à couvrir.

11. Dispositif selon la revendication précédente **caractérisé en ce que** les moyens de réception sont aptes à détecter les cibles potentielles dans chaque faisceau formé après post intégration non cohérente.

12. Dispositif selon une des revendications précédentes **caractérisé en ce que** les moyens d'émission possèdent des moyens aptes à ajuster la puissance émise au minimum en fonction de la portée instrumentée et la surface équivalente radar à détecter.

13. Dispositif selon une des revendications précédentes **caractérisé en ce que** les moyens de réception sont apte, en mode passif, à effectuer une intercorrélation des signaux reçus sur au moins trois sous réseaux de réception de façon à détecter et la localiser de façon angulaire les sources d'émission potentielles.

14. Dispositif selon la revendication précédente **caractérisé en ce que** les bases d'interférométrie sont formées par trois sous réseaux de réception, deux étant situés à chacune des deux extrémités de la structure antennaire et le troisième étant le voisin le plus proche de l'un des deux précédents.

15. Dispositif selon une des revendications 1 à 14 **caractérisé en ce que** les moyens de réception comportent des moyens de sélection aptes à sélectionner les sous réseaux à utiliser pour la détection et la localisation de façon différenciée au cours du temps de façon à séparer les signaux reçus et lever les ambigüités angulaires dans un environnement électromagnétique dense.

16. Dispositif selon une des revendications précédentes **caractérisé en ce qu'**il comprend n structures antennaires avec n>=3, chaque structure couvrant un domaine angulaire sensiblement égale à 360°/n et chaque structure étant disposé sur chacune des faces latérales d'un polyèdre de base un polygone à n cotés de façon à couvrir un domaine angulaire sensiblement égale à 360°.

**Patentansprüche**

1. Vorrichtung zur aktiven und passiven elektromagnetischen Erkennung mit einer geringen Abfangwahrscheinlichkeit, die eine feste Antennenstruktur, Sendemittel und Empfangsmittel umfasst,

   - wobei die Antennenstruktur aus mehreren Strahlungselementen gebildet ist, die zu identischen Subanordnungen gruppiert sind und wenigstens eine Sendesubanordnung und wenigstens drei Empfangssubanordnungen separat von den Sendesubanordnungen umfassen;
   - wobei die Sendemittel eine kontinuierliche oder quasikontinuierliche Wellenform mit einer niedrigen Spitzenleistung, die nicht in einer Ebene fokussiert ist, erzeugen und diese Wellenform über die ein oder mehreren Sendesubanordnungen senden können;
   - wobei die Empfangsmittel die Ziele nach Bildung mehrerer Richtungsstrahlen auf der Basis der auf den Empfangssubanordnungen der Antennenstruktur empfangenen Signale erkennen können;
   - wobei die Empfangsmittel von anderen Radarquellen stammende Radarsignale mithilfe eines Kreuzkorrelationsprozesses zwischen den auf wenigstens drei Empfangssubanordnungen empfangenen Signalen abfangen können, wobei die aus wenigstens drei Empfangssubanordnungen gebildete Gruppe ein lakunares Interferometriesystem erzeugt, dass die Shannon-Bedingungen für räumliche Abtastung nicht erfüllt,

   wobei die Vorrichtung **dadurch gekennzeichnet ist, dass** die Empfangsmittel ferner eine winkelmäßige Ortung der potentiellen Radarsendemittel durch Phaseninterferometrie durchführen können, wobei die verwendeten Empfangssubanordnungen wenigstens eine erste uneindeutige Interferometriebasis und eine zweite eindeutige Interferometriebasis bilden.

2. Vorrichtung nach dem vorherigen Anspruch, **dadurch gekennzeichnet, dass** die Antennenstruktur wenigstens zwei Sendesubanordnungen umfasst, und dadurch, dass die Sendemittel Signale mit unterschiedlichen Frequenzbändern erzeugen und diese Signale auf unterschiedlichen Sendesubanordnungen senden können.

3. Vorrichtung nach einem der vorherigen Ansprüche, **dadurch gekennzeichnet, dass** die Sendemittel Sendesignale von identischer Form erzeugen können, die auf unterschiedlichen Frequenzen zentriert sind und separate Frequenzbänder belegen.

4. Vorrichtung nach einem der vorherigen Ansprüche, **dadurch gekennzeichnet, dass** die Sendesignale eine kontinuierliche oder quasikontinuierliche Form haben und frequenzmoduliert sind.

5. Vorrichtung nach einem der vorherigen Ansprüche, **dadurch gekennzeichnet, dass** die Empfangsmittel die empfangenen Signale mit einem der Sendesignale demodulieren können.

6. Vorrichtung nach einem der Ansprüche 1 bis 4, **dadurch gekennzeichnet, dass** die Empfangsmittel die empfangenen Signale mit einem der Sendesignale nach dem Frequenztransponieren des Signals demodulieren können.

7. Vorrichtung nach einem der Ansprüche 2 bis 6, **dadurch gekennzeichnet, dass** die Empfangsmittel die empfangenen Signale nach der Demodulation in Empfangssubsignale durch Bandpassfiltern teilen können, wobei die Filterung in Abhängigkeit von den Sendesignalen durchgeführt wird.

8. Vorrichtung nach dem vorherigen Anspruch, **dadurch gekennzeichnet, dass** die Empfangsmittel die verschiedenen Empfangssignale auf kohärente Weise zeitlich integrieren können, wobei die Integration jedes Subsignals separat durchgeführt wird.

9. Vorrichtung nach Anspruch 7 oder 8, **dadurch gekennzeichnet, dass** die Empfangsmittel die Empfangssubsignale räumlich und auf kohärente Weise integrieren können, um Richtungsstrahlen in einer Ebene zu bilden.

10. Vorrichtung nach dem vorherigen Anspruch, **dadurch gekennzeichnet, dass** die Empfangsmittel die Empfangssubsignale nach kohärenter zeitlicher und räumlicher Integration während der gesamten zum Untersuchen des abzudeckenden Winkelfeldes zur Verfügung stehenden Zeit auf nicht kohärente Weise nachintegrieren können.

11. Vorrichtung nach dem vorherigen Anspruch, **dadurch gekennzeichnet, dass** die Empfangsmittel die potentiellen Ziele in jedem nach der nicht-kohärenten Nachintegration gebildeten Strahl erkennen können.

12. Vorrichtung nach einem der vorherigen Ansprüche, **dadurch gekennzeichnet, dass** die Sendemittel Mittel haben, die die gesendete Leistung wenigstens in Abhängigkeit von dem Erfassungsbereich und dem zu erkennenden Radarquerschnitt justieren können.

13. Vorrichtung nach einem der vorherigen Ansprüche, **dadurch gekennzeichnet, dass** die Empfangsmittel im passiven Modus eine Interkorrelation der auf wenigstens drei Empfangssubanordnungen empfangenen Signale durchführen können, um die potentiellen Sendequellen winkelmäßig zu erkennen und zu orten.

14. Vorrichtung nach dem vorherigen Anspruch, **dadurch gekennzeichnet, dass** die Interferometriebasen durch drei Empfangssubanordnungen gebildet werden, von denen sich zwei an jedem der beiden Enden der Antennenstruktur befinden und die dritte der nächste Nachbar von einer der vorherigen zwei ist.

15. Vorrichtung nach einem der Ansprüche 1 bis 14, **dadurch gekennzeichnet, dass** die Empfangsmittel Auswahlmittel umfassen, die die Subanordnungen auswählen können, die zum differenzierten Erkennen und Orten über die Zeit zu benutzen sind, um die empfangenen Signale zu teilen und die winkelmäßigen Uneindeutigkeit in einer dichten elektromagnetischen Umgebung zu beseitigen.

16. Vorrichtung nach einem der vorherigen Ansprüche, **dadurch gekennzeichnet, dass** sie n Antennenstrukturen umfasst, wobei n>3 ist, wobei jede Struktur ein Winkelfeld im Wesentlichen gleich 360°/n abdeckt und jede Struktur auf jeder der Seitenflächen eines Polyeders mit einer n-seitigen Polygonbasis angeordnet ist, um ein Winkelfeld abzudecken, das im Wesentlichen gleich 360° ist.

**Claims**

1. A device for active and passive electromagnetic detection with a low likelihood of interception, comprising a fixed antenna structure, emission means and reception means,

- said antenna structure being made up of a plurality of radiating elements grouped into identical sub-arrays and comprising at least one emission sub-array and at least three reception sub-arrays distinct from said emission sub-arrays;
- said emission means being able to generate a continuous or quasi-continuous waveform with a low peak power not focused in a plane and to transmit this waveform via the one or more emission sub-arrays;
- said reception means being able to detect the targets after forming a plurality of directive beams on the basis of the signals received on said reception sub-array of said antenna structure;
- said reception means being able to intercept radar signals originating from other radar sources using a cross-correlation process between the signals received on at least three receptions sub-arrays, the group formed from at least three reception sub-arrays realising a lacunar interferometry system that does not comply with the Shannon conditions on spatial sampling,

said device being **characterised in that** said reception means are further able to perform an angular location of the potential radar emission sources by phase interferometry, with the reception sub-arrays used forming at least one first ambiguous interferometry base and one second non-ambiguous interferometry base.

2. The device according to the preceding claim, **characterised in that** said antenna structure comprises at least two emission sub-arrays and **in that** said emission means are able to generate signals with different frequency bands and to emit said signals on different emission sub-arrays.

3. The device according to any one of the preceding claims, **characterised in that** said emission means are able to generate emission signals of identical shape centred on different frequencies and occupying separate frequency bands.

4. The device according to any one of the preceding claims, **characterised in that** said emission signals are of continuous or quasi-continuous shape and are frequency modulated.

5. The device according to any one of the preceding claims, **characterised in that** said reception means are able to demodulate the signals received by one of said emission signals.

6. The device according to any one of claims 1 to 4, **characterised in that** said reception means are able to demodulate the signals received by one of said emission signals after frequency transposing said signal.

7. The device according to any one of claims 2 to 6, **characterised in that** said reception means are able to split said received signals, after demodulation, into reception sub-signals by bandpass filtering, said filtering being carried out as a function of the emission signals.

8. The device according to the preceding claim, **characterised in that** said reception means are able to coherently, temporally integrate the various reception signals, the integration of each sub-signal being carried out separately.

9. The device according to claim 7 or 8, **characterised in that** said reception means are able to spatially and coherently integrate the reception sub-signals so as to form directive beams in a plane.

10. The device according to the preceding claim, **characterised in that**, after temporal and spatial coherent integration, said reception means are able to non-coherently post-integrate the reception sub-signals throughout the entire time available for exploring the angular field to be covered.

11. The device according to the preceding claim, **characterised in that** said reception means are able to detect the potential targets in each beam formed after non-coherent post-integration.

12. The device according to any one of the preceding claims, **characterised in that** said emission means have means that are able to adjust the emitted power at least as a function of the instrumented range and the radar cross-section to be detected.

13. The device according to any one of the preceding claims, **characterised in that** said reception means are able, in passive mode, to carry out an intercorrelation of the signals received on at least three reception sub-arrays so as to angularly detect and locate the potential emission sources.

14. The device according to the preceding claim, **characterised in that** the interferometry bases are formed by three reception sub-arrays, two being located at each of the two ends of the antenna structure and the third being the closest neighbour of one of the previous two.

15. The device according to any one of claims 1 to 14, **characterised in that** said reception means comprise selection means able to select the sub-arrays to be used for differentiated detection and location over time so as to split the received signals and remove the angular ambiguities in a dense electromagnetic environment.

16. The device according to any one of the preceding claims, **characterised in that** it comprises n antenna structures, with n>3, each structure covering an angular field substantially equal to 360°/n and each structure being arranged on each of the lateral faces of a polyhedron with an n-sided polygon base so as to cover an angular field that is substantially equal to 360°.

FIG.1

FIG.2a

FIG.2b

FIG.2c

FIG.3

Entrée
émission
N éléments
rayonnants

M sorties pour la réception

K Voies d'émission

M sorties pour la réception

FIG.4

Le=Lr=Mλ/2

52

Antenne de réception

Hr=Nλ/2

51

Antenne d'émission

He=Hr

FIG.5

FIG.6

FIG.7

FIG.8

L=60 cm=32λ/2

Le=6 cm=4λ/2

Lr=48 cm=32λ/2

Hr=48 cm=32λ/2

Antenne de réception

Antenne d'émission

32 voies de réception

EP 2 831 615 B1

E4 : Signal émis sur la voie 4

E3 : Signal émis sur la voie 3

E2 : Signal émis sur la voie 2

E1 : Signal émis sur la voie 1

FIG.9

Antenne
d'émission
4 voies

Antenne de réception

E4
E3
E2
E1

E1

Si

111

112

113

CAN

114

115

Filtrage
numérique
multi bande

Signal reçu
de E1 sur
le sous
réseau i

Signal reçu
de E2 sur
le sous
réseau i

Signal reçu
de E3 sur
le sous
réseau i

Signal reçu
de E4 sur
le sous
réseau i

FIG.10

121    122                                          123

Signal reçu de → Intégration
E1 sur le sous    cohérente
réseau 1          (FFT)

Signal reçu de → Intégration
E2 sur le sous    cohérente        Formation
réseau 1          (FFT)            de 4
                                   faisceaux
Signal reçu de → Intégration      sur le
E3 sur le sous    cohérente        signal
réseau1           (FFT)            d'émission        124
                                   sur le sous
                                   réseau de         Post
Signal reçu de → Intégration      réception 1       intégration     Sortie
E4 sur le sous    cohérente                          non            faisceau 1
réseau 1          (FFT)                               cohérente

Signal reçu de → Intégration
E1 sur le sous    cohérente
réseau i          (FFT)

Signal reçu de → Intégration                        Formation de P faisceaux par le calcul en réception
E2 sur le sous    cohérente        Formation
réseau i          (FFT)            de 4
                                   faisceaux
Signal reçu de → Intégration      sur le
E3 sur le sous    cohérente        signal
réseau i          (FFT)            d'émission        Post
                                   sur le sous       intégration     Sortie
Signal reçu de → Intégration      réseau de         non            faisceau i
E4 sur le sous    cohérente        réception i       cohérente
réseau i          (FFT)

Signal reçu de → Intégration
E1 sur le sous    cohérente
réseau P          (FFT)

Signal reçu de → Intégration      Formation
E2 sur le sous    cohérente        de 4
réseau P          (FFT)            faisceaux
                                   sur le
Signal reçu de → Intégration      signal          Post
E3 sur le sous    cohérente        d'émission        intégration     Sortie
réseau P          (FFT)            sur le sous       non            faisceau P
                                   réseau de         cohérente
Signal reçu de → Intégration      réception
E4 sur le sous    cohérente        P
réseau P          (FFT)

# FIG.11

FIG.12

FIG.13

Antenne de réception

Sous réseaux sélectionnés pour la fonction
détection passive

FIG.14

FIG.15

FIG.16

Bande utile

Bande utile

FIG.17

FIG.18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A new method for joint DOD and DOA estimation in bistatic MIMO radar. **CHEN J. et al.** SIGNAL PROCESSING. ELSEVIER SCIENCE PUBLISH-ERS, 01 Février 2010, vol. 90, 714-718